Europäisches Patentamt

European Patent Office

Office européen des brevets

(11) Numéro de publication: **0 507 657 B1**

# FASCICULE DE BREVET EUROPEEN

(45) Date de publication de fascicule du brevet: **14.06.95**

(51) Int. Cl.6: **C01B 25/37**, C01B 25/45, C01B 35/14, C01B 33/20

(21) Numéro de dépôt: **92400845.1**

(22) Date de dépôt: **26.03.92**

(54) **Phosphate de gallium microporeux cristallisé et ses dérives substitués, et leur procédé de préparation.**

(30) Priorité: **04.04.91 FR 9104225**

(43) Date de publication de la demande:
**07.10.92 Bulletin 92/41**

(45) Mention de la délivrance du brevet:
**14.06.95 Bulletin 95/24**

(84) Etats contractants désignés:
**BE DE FR GB IT NL**

(56) Documents cités:
**EP-A- 0 226 219**

**JOURNAL OF THE CHEMICAL SOCIETY, CHEMICAL COMMUNICATIONS, no. 9, 1 Mai 1985, LETCHWORTH, GB, pages 606-607; J.B.PARISE: '"Some gallium phosphate frameworks related to the aluminium phosphate molecular sieves: X-ray structural characterization of ((PriNH3)(Ga4(PO4)4.OH)).H2O"'**

**CHEMICAL JOURNAL OF CHINESE UNIVERSITIES, vol. 8, no. 10, 23 Mars 1987, UNKNOWN, pages 867-868; F.SHOUHUA ET AL.: '"Studies on the syntheses and structures of a novel family of microporous gallophosphates"'**

(73) Titulaire: **INSTITUT FRANCAIS DU PETROLE**
**4, avenue de Bois Préau**
**F-92502 Rueil-Malmaison (FR)**

(72) Inventeur: **Joly, Jean-François**
**20, rue Béranger**
**F-75003 Paris (FR)**
Inventeur: **Merrouche, Abdallah**
**35, rue des Vergers**
**F-68100 Mulhouse (FR)**
Inventeur: **Kessler, Henri**
**17, rue de la Fôret**
**F-68270 Wittenheim (FR)**
Inventeur: **Guth, Jean-Louis**
**59, rue Bellevue Brunstatt**
**F-68200 Mulhouse (FR)**

Rank Xerox (UK) Business Services
(3.10/3.09/3.3.3)

**Description**

La présente invention concerne un nouveau phosphate de gallium, ses dérivés substitués, et leur procédé de préparation.

Les tamis moléculaires (solides microporeux cristallisés) sont connus depuis de nombreuses années. En général, on distingue deux familles: 1. les zéolithes (aluminosilicates) et 2. les autres tamis moléculaires qui ne sont pas des aluminosilicates (solides "quasi-zéolithiques"). Dans la seconde catégorie de tamis moléculaires, on trouve des composés aluminophosphates cristallisés (voir US-A-4310440 par exemple) et les phosphates de gallium microporeux (voir EP-A-226 219 par exemple).

Le brevet EP-A-226219 décrit deux types de phosphates de gallium microporeux cristallisés, présentant des propriétés de tamis moléculaires. Ces produits correspondent à la formule générale suivante :

$$mR : Ga_2O_3 : (1 \mp 0,2) \, P_2O_5 : n \, H_2O$$

où R représente un agent structurant organique, amine ou ammonium quaternaire, situé dans les canaux du solide cristallisé, m et n représentent respectivement, le nombre de moles de R et de $H_2O$, par mole de $Ga_2O_3$. Le rapport molaire Ga/P de ces solides est pratiquement égal à 1. La charge positive $PO_2^+$ associée au phosphore dans les tétraèdres est compensée par la charge négative $GaO_2^-$ associée au gallium en coordinence tétraédrique dans la charpente cristallisée.

Après une étape de calcination, pour éliminer les espèces organiques, les deux phosphates de gallium décrits dans le brevet EP-A-226219 peuvent être utilisés comme adsorbants et comme catalyseurs.

D'autres phosphates de gallium microporeux cristallisés ont été décrits dans les articles "Some gallium phosphates frameworks related to the aluminium phosphate molecular sieves : X-ray structural characterization of {(i-PrNH₃)[Ga₄(PO₄)₄OH]}.H₂O" par J.P. Parise, J. Chem. Soc., Chem. Comm., 1985, pages 606-607, et "Studies on the synthesis and structures of a novel family of microporous gallophosphates" par Feng Shouhua et Xu Ruren, Chemical Journal of Chinese Universities, 1987, vol. 8, pages 867-868.

La présente invention concerne un nouveau phosphate de gallium microporeux cristallisé et ses dérivés substitués, ainsi qu'un procédé de synthèse dudit phosphate de gallium et de ses dérivés subsitués.

Le nouveau phosphate de gallium et ses dérivés substitués selon la présente invention sont caractérisés par :

a) la formule générale approchée suivante :

$$R_r \, Ga_g \, P_p \, X_x \, O_2 \, F_f, \, h \, H_2O$$

où la somme de g, p et x est égale à 1.
g est un nombre compris entre 0,3 et 0,5, et de préférence entre 0,4 et 0,5,
p est un nombre compris entre 0,3 et 0,5,
x est un nombre compris entre 0 et 0,4, et de préférence entre 0 et 0,2,
r est un nombre compris entre 0,01 et 0,2
f est un nombre compris entre 0,01 et 0,2
h varie suivant le degré d'hydratation du solide entre 0 et 0,5.
R est un composé organique, choisi dans le groupe formé par les amines cycliques, de préférence la quinuclidine,
X est un hétéroatome choisi dans le groupe formé par les éléments : Li, Be, Co, Mg, Mn, Zn, Al, B, Cr, Fe, Ge, Si, Ti, As, et V, de préférence Si,
b) un diagramme de diffraction des rayons X représenté dans le tableau 1.

Ils sont également caractérisés par le fait qu'ils ont été synthétisés en milieu fluorure.

L'invention concerne aussi un procédé de préparation dudit phosphate de gallium et de ses dérivés substitués qui consiste en ce que :

a) on forme un mélange réactionnel qui renferme au moins les composes suivants: l'eau, au moins une source de gallium, au moins une source de phosphore, éventuellement au moins une source d'un hétéroatome X choisi dans le groupe formé par les éléments : Li, Be, Co, Mg, Mn, Zn, Al, B, Cr, Fe, Ge, Si, Ti, As, et V, de préférence Si, au moins une source d'au moins un composé organique, au moins une source d'anions fluorures et éventuellement au moins une source d'au moins un composé acide ou basique pour ajuster le pH du milieu réactionnel à la valeur désirée, le pH du milieu réactionnel étant compris entre 3 et 8 et ledit mélange réactionnel ayant la composition, en termes de rapport molaire, suivante :

$$r'R : Ga_2O_3 : p'P_2O_5 : x'XO_{n/2} : f'F : h'H_2O$$

où r' est un nombre compris entre 1 et 10, de préférence entre 5 et 10,

où p' est un nombre compris entre 0,3 et 1, de préférence entre 0,5 et 1,

où x' est un nombre compris entre 0 et 1,5, de préférence entre 0 et 1,

où f' est un nombre compris entre 0,1 et 4, de préférence entre 0,3 et 2,

où h' est un nombre compris entre 1 et 500, de préférence entre 30 et 100,

où R est un composé organique, choisi dans le groupe formé par les amines cycliques, de préférence la quinuclidine,

où n est le degré d'oxydation de l'hétéroatome X,

b) on maintient ledit mélange réactionnel à une température de chauffage supérieure à 40 °C jusqu'à ce que l'on obtienne un composé cristallin.

Les anions fluorures peuvent être introduits sous forme d'acide fluorhydrique ou de ses sels. Ces sels sont formés avec des métaux alcalins, l'ammonium ou de préférence avec le composé organique utilisé. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$ ou de sodium $Na_2SiF_6$ ; on utilise de préférence le tétrafluorure de silicium $SiF_4$.

Le composé organique est une amine cyclique. On utilise de préférence la quinuclidine.

Parmi les sources de gallium, on peut utiliser les oxydes et hydroxydes de gallium, comme GaOOH, les alkoxydes de gallium de formule $Ga(OR_1)_3$ où $R_1$ est un radicale alkyle, les sels de gallium comme le fluorure de gallium, le phosphate de gallium ou le sulfate de gallium. On utilise de préférence le sulfate de gallium.

De nombreuses sources d'hétéroatomes peuvent être employées. Ainsi, dans le cas du silicium, on peut utiliser un hydrogel, un aérogel ou une suspension colloïdale, les oxydes de précipitation, les oxydes provenant de l'hydrolyse d'esters tels que l'orthosilicate d'éthyle $Si(OEt)_4$ ou les oxydes provenant de l'hydrolyse de complexes comme le fluorosilicate d'ammonium $(NH_4)_2SiF_6$ ou de sodium $Na_2SiF_6$.

La source de phosphore préférée est l'acide phosphorique $H_3PO_4$, mais ses sels et esters comme les phosphates alcalins, les phosphates de gallium ou les phosphates d'alkyles conviennent également.

Les acides ou sels d'acides, les bases ou sels basiques servant éventuellement à ajuster le pH du milieu réactionnel à la valeur souhaitée peuvent être choisis parmi les acides usuels, tels que par exemple l'acide chlorhydrique, l'acide sulfurique, l'acide nitrique ou l'acide acétique, les sels acides comme l'hydrogénofluorure d'ammonium ou l'hydrogénosulfate de sodium, les bases courantes usuelles comme l'ammoniaque ou l'hydroxyde de sodium et les bases azotées comme la méthylamine. Des mélanges tampons tels que le tampon acétate (acide acétique - acétate de sodium) ou le tampon ammoniacal (ammoniaque - chlorure d'ammonium) conviennent également.

La première étape du procédé de synthèse selon l'invention consiste à réaliser le mélange réactionnel comprenant l'eau, la source de gallium, la source de phosphore, éventuellement la source de l'hétéroatome X, la source d'anions fluorures, le composé organique, éventuellement une source de cations complémentaire pour la compensation des charges de la charpente et éventuellement au moins un composé acide ou basique. Le composé organique et le composé acide ou basique sont généralement ajoutés en dernier pour permettre l'ajustement du pH à la valeur désirée.

La seconde étape consiste en la cristallisation du mélange réactionnel formé dans la première étape. Elle s'effectue en chauffant le mélange réactionnel à une température comprise entre 40 et 250 °C, de préférence entre 60 et 220 °C sous pression autogène. On utilise de préférence un récipient bouché en polypropylène ou un autoclave intérieurement revêtu d'un matériau polymère, en général du polytétrafluoroéthylène, pour les températures inférieures à 100 °C et supérieures à 100 °C respectivement.

La durée du chauffage du mélange réactionnel nécessaire à la cristallisation dépend de la composition du mélange réactionnel et de la température de réaction.

La taille et la cinétique de formation des cristaux peuvent être modifiées par introduction dans le milieu réactionnel de germes constitués par des cristaux, éventuellement broyés, du phosphate de gallium et de ses dérivés substitués selon l'invention et par l'agitation en cours de cristallisation.

Après cristallisation, le phosphate de gallium cristallisé microporeux est séparé des eaux mères par filtration ou centrifugation, lavé à l'eau distillée et séché à l'air à 40 °C. Le solide ainsi obtenu contient occlus dans ses cavités le composé organique introduit dans le milieu réactionnel. Ce dernier est associé d'une part au fluorure et d'autre part joue le rôle de cation de compensation de la charge négative de la charpente résultant de l'incorporation de l'hétéroatome X dans la charpente cristallisée. En plus du composé organique, le phosphate de gallium selon l'invention peut contenir au sein de ses cavités de l'eau d'hydratation et des cations de compensation minéraux si les cations organiques ne sont pas en nombre suffisant. La déshydratation du solide selon l'invention peut être effectuée par chauffage à 150 °C.

Le phosphate de gallium et ses dérivés substitués ainsi préparés selon l'invention peuvent être débarrassés des composés organiques présents au sein des cavités après l'étape de synthèse par traitement de calcination à une température supérieure à 200 °C et de préférence comprise entre 350 et 450 °C.

L'identification du phosphate de gallium cristallisé microporeux selon l'invention de fait de manière commode à partir de son diagramme de diffraction des rayons X. Ce diagramme est obtenu à l'aide d'un diffractomètre en utilisant la méthode classique des poudres avec le rayonnement $K\alpha$ du cuivre. A partir de la position des pics de diffraction représentée par l'angle $2\theta$, on calcule, par la relation de Bragg, les équidistances réticulaires $d_{hkl}$ caractéristiques de l'échantillon. L'estimation de l'erreur de mesure $\Delta(d_{hkl})$ sur $d_{hkl}$ se calcule en fonction de l'erreur absolue $\Delta(2\theta)$ affectée à la mesure de $2\theta$ par la relation de Bragg. Une erreur absolue $\Delta(2\theta)$ égale à $\mp$ 0,05° est communément admise. L'intensité $I_{rel.}$ affectée à chaque valeur de $d_{hkl}$ est mesurée d'après la hauteur du pic de diffraction correspondant. Le dépouillement du diagramme de diffraction des rayons X présenté dans le tableau 1 de la présente description est représentatif du diagramme de diffraction du phosphate de gallium et de ses dérivés substitués selon la présente invention.

TABLEAU 1

| 2θ (°) | $d_{hkl}$ (Å) | $I_{rel.}$ |
|---|---|---|
| 3,4 - 3,6 | 25,9 - 24,5 | mf à m |
| 4,7 - 4,9 | 18,7 - 18,0 | f à mf |
| 5,9 - 6,1 | 14,9 - 14,4 | mf à m |
| 6,8 - 7,0 | 12,9 - 12,6 | f à mf |
| 7,4 - 7,6 | 11,9 - 11,6 | tf à f |
| 8,2 - 8,3 | 10,7 - 10,6 | mf à m |
| 8,3 - 8,6 | 10,6 - 10,5 | tf à f |
| 9,6 - 9,8 | 9,7 - 9,2 | TF |
| 10,1 - 10,3 | 8,75 - 8,58 | m à F |
| 11,3 - 11,5 | 7,82 - 7,68 | tf à f |
| 11,8 - 12 | 7,49 - 7,36 | mf à mF |
| 12,3 - 12,5 | 7,18 - 7,07 | tf à f |
| 12,8 - 13,0 | 6,91 - 6,80 | tf à f |
| 13,6 - 13,8 | 6,50 - 6,41 | f à mf |
| 14 - 14,2 | 6,32 - 6,23 | m à mF |
| 14,4 - 14,6 | 6,14 - 6,06 | tf à f |
| 15,2 - 15,4 | 5,82 - 5,74 | tf à f |
| 15,6 - 15,8 | 5,67 - 5,60 | tf à f |
| 16 - 16,2 | 5,53 - 5,46 | tf à f |
| 16,7 - 16,9 | 5,30 - 5,24 | tf à f |
| 17 - 17,2 | 5,21 - 5,15 | tf à f |
| 17,4 - 17,6 | 5,09 - 5,03 | tf à f |
| 17,7 - 17,9 | 5,00 - 4,95 | tf à f |

| | | |
|---|---|---|
| 18,4 - 18,6 | 4,81 - 4,76 | f à mf |
| 18,7 - 18,9 | 4,74 - 4,69 | tf à f |
| 19,4 - 19,6 | 4,57 - 4,52 | tf à f |
| 19,6 - 19,8 | 4,52 - 4,48 | tf à f |
| 20,5 - 20,7 | 4,32 - 4,28 | mf à mF |
| 20,8 - 21,0 | 4,26 - 4,22 | tf à f |
| 21,1 - 21,3 | 4,20 - 4,16 | f à mf |
| 21,4 - 21,6 | 4,14 -4,11 | tf à f |
| 21,7 - 21,9 | 4,09 - 4,05 | tf à f |
| 22,0 - 22,2 | 4,03 - 4,00 | tf à f |
| 22,3 - 22,4 | 3,98 - 3,95 | tf à f |
| 22,4 - 22,6 | 3,95 - 3,93 | tf à f |
| 22,7 - 22,9 | 3,91 - 3,88 | tf à f |
| 23,0 - 23,2 | 3,86 - 3,83 | tf à f |
| 23,3 - 23,5 | 3,81 - 3,78 | tf à f |
| 23,9 - 24,1 | 3,71 - 3,68 | f à mf |
| 24,2 - 24,4 | 3,67 - 3,64 | f à mf |
| 24,5 - 24,7 | 3,63 - 3,60 | f à mf |
| 24,8 - 25,0 | 3,58 - 3,55 | f à mf |
| 25,0 - 25,2 | 3,55 - 3,53 | tf à f |
| 25,3 - 25,5 | 3,51 - 3,49 | tf à f |
| 25,6 - 25,8 | 3,47 - 3,45 | tf à f |
| 25,9 - 26,1 | 3,43 - 3,41 | f à mf |
| 26,4 - 26,6 | 3,37 - 3,34 | f à mf |
| 27,1 - 27,2 | 3,29 - 3,27 | f à mf |
| 27,6 - 27,8 | 3,22 - 3,20 | tf à f |

| | | |
|---|---|---|
| 27,9 - 28,10 | 3,19 - 3,17 | tf à f |
| 28,4 - 28,6 | 3,13 - 3,11 | f à mf |
| 28,7 - 28,9 | 3,10 - 3,08 | mf à mF |
| 29,2 - 29,4 | 3,05 - 3,03 | tf à f |
| 29,6 - 29,8 | 3,01 - 2,995 | tf à f |
| 30,2 - 30,4 | 2,956 - 2,937 | tf à f |
| 30,5 - 30,7 | 2,928 - 2,909 | tf à f |
| 31,0 - 31,2 | 2,882 - 2,864 | f à mf |
| 32,0 - 32,2 | 2,794 - 2,777 | tf à f |
| 32,7 - 32,9 | 2,736 - 2,720 | tf à f |
| 33,3 - 33,5 | 2,688 - 2,672 | tf à f |
| 34,7 - 34,9 | 2,582 - 2,568 | tf à f |
| 35,4 - 35,6 | 2,533 - 2,519 | tf à f |
| 38,3 - 38,5 | 2,348 - 2,336 | tf à f |
| 43,1 - 43,3 | 2,096 - 2,087 | tf à f |
| 44,9 - 45,1 | 2,017 - 2,008 | tf à f |
| 48,0 - 48,2 | 1,893 - 1,886 | tf à f |

TF : très fort, F : fort, mF : moyen fort, m : moyen, mf : moyen faible, f : faible, tf : très faible

Le phosphate de gallium et ses dérivés substitués selon l'invention peuvent être utilisés comme adsorbants et catalyseurs.

Les exemples suivants illustrent la présente invention sans toutefois en limiter la portée.

Exemple 1

On dissout dans 8,5 g d'eau distillée, 6,5 g de sulfate de gallium hydraté (le rapport molaire $H_2O/Ga_2(SO_4)_3$ dans le sel est proche de 25). Ce sulfate est obtenu par dissolution à chaud de gallium, Grade 1 de Johnson Matthey, dans de l'acide $H_2SO_4$ concentré en excès, reprise à température ordinaire de la suspension obtenue par l'éthanol à 60% dans l'eau, reprécipitation, dans cette solution refroidie, du sulfate de gallium hydraté par addition d'éther, puis filtration et séchage ménagé. On ajoute sous agitation 2,3 g d'acide phosphorique à 85% (Prolabo) puis 0,2 g d'acide fluorhydrique à 40% (Fluka) et enfin 6,6 g de quinuclidine (Aldrich), notée Q par la suite. On continue l'agitation pendant environ 15 minutes. Le pH du mélange réactionnel ainsi obtenu est égal à 5.

La composition du mélange réactionnel est alors la suivante:

6 Q : 1 $Ga_2O_3$ : 1 $P_2O_5$ : 0,4 HF : 64 $H_2O$

Le mélange réactionnel est transvasé dans un autoclave muni d'une chemise en polytétrafluoroéthylène et est chauffé à 140 °C pendant 24 heures. Après refroidissement, le solide est filtré, lavé à l'eau distillée et séché à environ 40 °C. L'analyse par diffraction des rayons X de ce solide montre qu'il s'agit d'une phase de structure cristalline cubique dont le diagramme de diffraction des rayons X est identique à celui du tableau 1 de la présente description.

L'analyse chimique du solide donne la composition pondérale (en %) suivante:

C : 10,44 ; N : 1,65 ; F : 2,20 ; Ga : 29,0 ; P : 13,82

La formule chimique correspondante pour la forme anhydre est la suivante:

$Q_{0,14}Ga_{0,48}P_{0,52}O_2F_{0,13}$

## Exemple 2

Cet exemple illustre le rôle primordial des ions fluorures dans le milieu de synthèse pour l'obtention du phosphate de gallium cristallisé microporeux et de ses dérivés substitués selon l'invention.

Un essai a été réalisé en absence d'ions fluorures dans les conditions de l'exemple 1.

L'observation au microscope optique et au microscope électronique à balayage (MEB) du solide cristallisé obtenu montre des cristaux prismatiques hexagonaux de 80 micromètres environ. Le diagramme de diffraction des rayons X obtenu est semblable à celui du brevet EP-A-226219.

## Exemple 3

On dissout 6,5 g de sulfate de gallium hydraté dans 8,5 g d'eau distillée. On ajoute sous agitation 2,31 g d'acide phosphorique (solution à 85%) puis 0,5 g de HF (solution à 40%) et enfin 6,6 g de quinuclidine. Le pH du mélange réactionnel homogénéisé est de 4,5.

La composition du mélange réactionnel est la suivante :

6 Q : 1 $Ga_2O_3$ : 1 $P_2O_5$ : 1 HF : 64 $H_2O$

Ce mélange réactionnel est transvasé dans un autoclave semblable à celui de l'exemple 1, puis est chauffé à 150 °C pendant 24 heures. Le solide obtenu est filtré, lavé à l'eau distillée et séché à 40 °C.

L'observation du solide obtenu au microscope à balayage montre des cristaux sous forme de cubes aux sommets tronqués de 1 à 2 micromètres d'arête.

L'analyse chimique du solide donne la composition pondérale (en %) suivante:

C : 9,06 ; N : 1,54 ; F : 2,22 ; Ga : 31,44 ; P : 14,63

La formule chimique correspondante pour la forme anhydre est la suivante:

$Q_{0,12}Ga_{0,49}P_{0,51}O_2F_{0,13}$

Le diagramme de diffraction des rayons X du solide obtenu est identique à celui du tableau 1 de la présente description.

Les pertes de masse mesurées par thermogravimétrie par chauffage sous courant d'argon jusqu'à 450 °C sont les suivantes :

$H_2O$ : 10% ; quinuclidine + F : 20 %

La capacité d'adsorption de diverses molécules a été déterminée à l'aide d'une électrobalance sur l'échantillon calciné in-situ. Un premier chauffage est effectué sous pression réduite (1 mbar) à 450 °C pendant 3 heures. L'échantillon est ensuite refroidi jusqu'à 100 °C à raison de 10 °C/minute, l'enceinte est alors remplie d'oxygène sec et la température portée à nouveau à 450 °C à raison de 5 °C/minute. Le

EP 0 507 657 B1

solide est maintenu à 450 °C pendant 1 heure environ puis refroidi à température ambiante sous courant d'oxygène sec.

Les capacités d'adsorption du solide calciné sont les suivantes :

|  | P/Po | T(°C) | quantité adsorbée en poids (%) |
|---|---|---|---|
| n-hexane | 0,5 | 29 | 10,05 |
| p-xylène | 0,9 | 27 | 10,95 |
| mésitylène | 0,9 | 35 | 4,63 |
| tri-isopropylbenzène | 0,9 | 25 | 5,29 |

Exemple 4

On opère comme dans l'exemple 1 mais le mélange réactionnel est chauffé à 150 °C pendant 15 heures. L'observation au microscope électronique à balayage montre des cubes aux sommets tronqués de 50 à 80 micromètres d'arête.

Le diagramme de diffraction des rayons X du solide est identique à celui du tableau 1 de la présente description.

Exemple 5

Un mélange réactionnel de même composition que celui de l'exemple 1 est chauffé à 220 °C pendant 7 heures. L'observation au microscope électronique du solide obtenu montre des cristaux cubiques de 1 à 3 micromètres d'arête.

Le diagramme de diffraction des rayons X du solide obtenu est identique à celui du tableau 1 de la présente desciption.

Exemple 6 : préparation d'un silico-gallophosphate.

Dans cette préparation, on utilise une source de silice de combustion commercialisée sous le nom d'Aerosil par Degussa.

Les sources de gallium, de phosphore, de fluorure et de composé organique sont par ailleurs les mêmes que celles utilisées dans l'exemple 1.

On dissout 6,5 g de sulfate de gallium hydraté dans 8,5 g d'eau distillée, on ajoute 0,36 g de silice Aérosil puis 6,66 g de quinuclidine. On ajouté à la préparation 2,31 g d'acide phosphorique et 0,5 g d'acide fluorhydrique.

La composition chimique du mélange réactionnel est alors la suivante :

$$6 \, Q : 1 \, Ga_2O_3 : 1 \, P_2O_5 : 0,6 \, SiO_2 : 1 \, HF : 64 \, H_2O$$

Le mélange réactionnel obtenu après agitation (pH = 4,5) est placé dans le même type d'autoclave que précédemment et porté à 150 °C pendant 24 heures.

Après réaction, le solide entièrement cristallisé est filtré, lavé à l'eau distillée, séché à 40 °C. Le spectre de diffraction des rayons X correspond à celui du tableau 1 de la présente description.

L'analyse chimique du solide conduit à la formule suivante pour la forme anhydre et débarrassée du composé organique :

$$Ga_{0,5}P_{0,45}Si_{0,05}O_2$$

**Revendications**

1. Phosphate de gallium cristallisé microporeux et ses dérivés substitués caractérisés par :
   a) la formule générale approchée suivante :

   $$R_r \, Ga_g \, P_p \, X_x \, O_2 \, F_f, \, h \, H_2O$$

9

où la somme de g, p et x est égale à 1,

et où :

g est un nombre compris entre 0,3 et 0,5,

p est un nombre compris entre 0,3 et 0,5,

x est un nombre compris entre 0 et 0,4,

r est un nombre compris entre 0,01 et 0,2

f est un nombre compris entre 0,01 et 0,2

h varie suivant le degré d'hydratation du solide entre 0 et 0,5.

R est un composé organique, choisi dans le groupe formé par les amines cycliques,

X est un hétéroatome choisi dans le groupe formé par les éléments : Li, Be, Co, Mg, Mn, Zn, Al, B, Cr, Fe, Ge, Si, Ti, As, et V,

b) un diagramme de diffraction des rayons X représenté dans le tableau suivant :

### TABLEAU 1

| $2\theta$ (°) | $d_{hkl}$ (Å) | $I_{rel.}$ |
|---|---|---|
| 3,4 - 3,6 | 25,9 - 24,5 | mf à m |
| 4,7 - 4,9 | 18,7 - 18,0 | f à mf |
| 5,9 - 6,1 | 14,9 - 14,4 | mf à m |
| 6,8 - 7,0 | 12,9 - 12,6 | f à mf |
| 7,4 - 7,6 | 11,9 - 11,6 | tf à f |
| 8,2 - 8,3 | 10,7 - 10,6 | mf à m |
| 8,3 - 8,6 | 10,6 - 10,5 | tf à f |
| 9,6 - 9,8 | 9,7 - 9,2 | TF |
| 10,1 - 10,3 | 8,75 - 8,58 | m à F |
| 11,3 - 11,5 | 7,82 - 7,68 | tf à f |
| 11,8 - 12 | 7,49 - 7,36 | mf à mF |
| 12,3 - 12,5 | 7,18 - 7,07 | tf à f |
| 12,8 - 13,0 | 6,91 - 6,80 | tf à f |
| 13,6 - 13,8 | 6,50 - 6,41 | f à mf |
| 14 - 14,2 | 6,32 - 6,23 | m à mF |
| 14,4 - 14,6 | 6,14 - 6,06 | tf à f |
| 15,2 - 15,4 | 5,82 - 5,74 | tf à f |
| 15,6 - 15,8 | 5,67 - 5,60 | tf à f |
| 16 - 16,2 | 5,53 - 5,46 | tf à f |
| 16,7 - 16,9 | 5,30 - 5,24 | tf à f |
| 17 - 17,2 | 5,21 - 5,15 | tf à f |
| 17,4 - 17,6 | 5,09 - 5,03 | tf à f |
| 17,7 - 17,9 | 5,00 - 4,95 | tf à f |

| | | |
|---|---|---|
| 18,4 - 18,6 | 4,81 - 4,76 | f à mf |
| 18,7 - 18,9 | 4,74 - 4,69 | tf à f |
| 19,4 - 19,6 | 4,57 - 4,52 | tf à f |
| 19,6 - 19,8 | 4,52 - 4,48 | tf à f |
| 20,5 - 20,7 | 4,32 - 4,28 | mf à mF |
| 20,8 - 21,0 | 4,26 - 4,22 | tf à f |
| 21,1 - 21,3 | 4,20 - 4,16 | f à mf |
| 21,4 - 21,6 | 4,14 - 4,11 | tf à f |
| 21,7 - 21,9 | 4,09 - 4,05 | tf à f |
| 22,0 - 22,2 | 4,03 - 4,00 | tf à f |
| 22,3 - 22,4 | 3,98 - 3,95 | tf à f |
| 22,4 - 22,6 | 3,95 - 3,93 | tf à f |
| 22,7 - 22,9 | 3,91 - 3,88 | tf à f |
| 23,0 - 23,2 | 3,86 - 3,83 | tf à f |
| 23,3 - 23,5 | 3,81 - 3,78 | tf à f |
| 23,9 - 24,1 | 3,71 - 3,68 | f à mf |
| 24,2 - 24,4 | 3,67 - 3,64 | f à mf |
| 24,5 - 24,7 | 3,63 - 3,60 | f à mf |
| 24,8 - 25,0 | 3,58 - 3,55 | f à mf |
| 25,0 - 25,2 | 3,55 - 3,53 | tf à f |
| 25,3 - 25,5 | 3,51 - 3,49 | tf à f |
| 25,6 - 25,8 | 3,47 - 3,45 | tf à f |
| 25,9 - 26,1 | 3,43 - 3,41 | f à mf |
| 26,4 - 26,6 | 3,37 - 3,34 | f à mf |
| 27,1 - 27,2 | 3,29 - 3,27 | f à mf |
| 27,6 - 27,8 | 3,22 - 3,20 | tf à f |

| | | |
|---|---|---|
| 27,9 - 28,10 | 3,19 - 3,17 | tf à f |
| 28,4 - 28,6 | 3,13 - 3,11 | f à mf |
| 28,7 - 28,9 | 3,10 - 3,08 | mf à mF |
| 29,2 - 29,4 | 3,05 - 3,03 | tf à f |
| 29,6 - 29,8 | 3,01 - 2,995 | tf à f |
| 30,2 - 30,4 | 2,956 - 2,937 | tf à f |
| 30,5 - 30,7 | 2,928 - 2,909 | tf à f |
| 31,0 - 31,2 | 2,882 - 2,864 | f à mf |
| 32,0 - 32,2 | 2,794 - 2,777 | tf à f |
| 32,7 - 32,9 | 2,736 - 2,720 | tf à f |
| 33,3 - 33,5 | 2,688 - 2,672 | tf à f |
| 34,7 - 34,9 | 2,582 - 2,568 | tf à f |
| 35,4 - 35,6 | 2,533 - 2,519 | tf à f |
| 38,3 - 38,5 | 2,348 - 2,336 | tf à f |
| 43,1 - 43,3 | 2,096 - 2,087 | tf à f |
| 44,9 - 45,1 | 2,017 - 2,008 | tf à f |
| 48,0 - 48,2 | 1,893 - 1,886 | tf à f |

TF : très fort, F : fort, mF : moyen fort, m : moyen, mf : moyen faible, f : faible, tf : très faible

2. Phosphate de gallium cristallisé microporeux et ses dérivés substitués selon la revendication 1 pour lesquels l'hétéroatome X est le silicium.

3. Phosphate de gallium cristallisé microporeux et ses dérivés substitués selon l'une des revendications 1 ou 2 pour lesquels R est la quinuclidine.

4. Procédé de préparation du phosphate de gallium cristallisé microporeux et de ses dérivés substitués selon l'une des revendications 1 à 3 caractérisé en ce que:
a) on forme un mélange réactionnel qui renferme au moins les composés suivants : l'eau, au moins une source de gallium, au moins une source de phosphore, au moins une source d'un hétéroatome X choisi dans le groupe formé par les éléments : Li, Be, Co, Mg, Mn, Zn, Al, B, Cr, Fe, Ge, Si, Ti, As, et V, au moins une source d'au moins un composé organique, au moins une source d'anions fluorures, le pH du milieu réactionnel étant compris entre 3 et 8 et ledit mélange réactionnel ayant la composition, en termes de rapport molaire, suivante :

$r'R : Ga_2O_3 : p'P_2O_5 : x'XO_{n/2} : f'F : h'H_2O$

EP 0 507 657 B1

où r' est un nombre compris entre 1 et 10,
où p' est un nombre compris entre 0,3 et 1,
où x' est un nombre compris entre 0 et 1,5,
où f' est un nombre compris entre 0,1 et 4,
où h' est un nombre compris entre 1 et 500,
où R est un composé organique, choisi dans le groupe formé par les amines cycliques,
où n est le degré d'oxydation de l'hétéroatome X,
b) on maintient ledit mélange réactionnel à une température de chauffage supérieure à 40 °C jusqu'à ce que l'on obtienne un composé cristallin.

5. Procédé selon la revendication 4 dans lequel dans l'étape a), ledit mélange réactionnel a la composition, en termes de rapport molaire, suivante :

$$r'R : Ga_2O_3 : p'P_2O_5 : x' XO_{n/2} : f'F : h'H_2O$$

où r' est un nombre compris entre 5 et 10,
où p' est un nombre compris entre 0,5 et 1,
où x' est un nombre compris entre 0 et 1,
où f' est un nombre compris entre 0,3 et 2,
où h' est un nombre compris entre 30 et 100,

6. Procédé selon l'une des revendications 4 ou 5 dans lequel R est la quinuclidine.

7. Procédé selon l'une des revendications 4 à 6 dans lequel X est le silicium.

8. Procédé selon l'une des revendications 4 à 7 dans lequel, dans l'étape b), on maintient ledit mélange réactionnel à une température de chauffage comprise entre 40 et 250 °C jusqu'à ce que l'on obtienne un composé cristallin.

9. Procédé selon l'une des revendications 4 à 7 dans lequel, dans l'étape b), on maintient ledit mélange réactionnel à une température de chauffage comprise entre 60 et 220 °C jusqu'à ce que l'on obtienne un composé cristallin.

10. Procédé selon l'une des revendictions 4 à 9, dans lequel, après l'étape b), on procède à un traitement de calcination du solide à une température supérieure à 200°C.

**Claims**

1. Microporous crystallised gallium phosphate and its substituted derivatives, characterised by:
a) the following approximate general formula:

$$R_fGa_gP_pX_xO_2F_{f'}hH_2O$$

where the sum of g, p and x is equal to 1.
g is a number from 0.3 to 0.5,
p is a number from 0.3 to 0.5,
x is a number from 0 to 0.4,
r is a number from 0.01 to 0.2,
f is a number from 0.01 to 0.2,
h varies according to the degree of hydration of the solid, from 0 to 0.5.
R is an organic compound selected from the group formed by cyclic amines,
X is a heteroatom selected from the group formed by the elements:
Li, Be, Co, Mg, Mn, Zn, Al, B, Cr, Fe, Ge, Si, Ti, As and V

14

b) an X-ray diffraction diagram shown in the following table

TABLE 1

| 2θ (°) | d (Å) | I |
|---|---|---|
| 3,4 - 3,6 | 25,9 - 24,5 | ml - m |
| 4,7 - 4,9 | 18,7 - 18,0 | l - ml |
| 5,9 - 6,1 | 14,9 - 14,4 | ml - m |
| 6,8 - 7,0 | 12,9 - 12,6 | l - ml |
| 7,4 - 7,6 | 11,9 - 11,6 | vl - l |
| 8,2 - 8,3 | 10,7 - 10,6 | ml - m |
| 8,3 - 8,6 | 10,6 - 10,5 | vl - l |
| 9,6 - 9,8 | 9,7 - 9,2 | vh |
| 10,1 - 10,3 | 8,75 - 8,58 | m - h |
| 11,3 - 11,5 | 7,82 - 7,68 | vl - l |
| 11,8 - 12 | 7,49 - 7,36 | ml - mh |
| 12,3 - 12,5 | 7,18 - 7,07 | vl - l |
| 12,8 - 13,0 | 6,91 - 6,80 | vl - l |
| 13,6 - 13,8 | 6,50 - 6,41 | l - ml |
| 14 - 14,2 | 6,32 - 6,23 | m - mh |
| 14,4 - 14,6 | 6,14 - 6,06 | vl - l |
| 15,2 - 15,4 | 5,82 - 5,74 | vl - l |
| 15,6 - 15,8 | 5,67 - 5,60 | vl - l |
| 16 - 16,2 | 5,53 - 5,46 | vl - l |
| 16,7 - 16,9 | 5,30 - 5,24 | vl - l |
| 17 - 17,2 | 5,21 - 5,15 | vl - l |
| 17,4 - 17,6 | 5,09 - 5,03 | vl - l |
| 17,7 - 17,9 | 5,00 - 4,95 | vl - l |

| | | |
|---|---|---|
| 18,4 - 18,6 | 4,81 - 4,76 | l - ml |
| 18,7 - 18,9 | 4,74 - 4,69 | vl - l |
| 19,4 - 19,6 | 4,57 - 4,52 | vl - l |
| 19,6 - 19,8 | 4,52 - 4,48 | vl - l |
| 20,5 - 20,7 | 4,32 - 4,28 | ml - mh |
| 20,8 - 21,0 | 4,26 - 4,22 | vl - l |
| 21,1 - 21,3 | 4,20 - 4,16 | l - ml |
| 21,4 - 21,6 | 4,14 - 4,11 | vl - l |
| 21,7 - 21,9 | 4,09 - 4,05 | vl - l |
| 22,0 - 22,2 | 4,03 - 4,00 | vl - l |
| 22,3 - 22,4 | 3,98 - 3,95 | vl - l |
| 22,4 - 22,6 | 3,95 - 3,93 | vl - l |
| 22,7 - 22,9 | 3,91 - 3,88 | vl - l |
| 23,0 - 23,2 | 3,86 - 3,83 | vl - l |
| 23,3 - 23,5 | 3,81 - 3,78 | vl - l |
| 23,9 - 24,1 | 3,71 - 3,68 | l - ml |
| 24,2 - 24,4 | 3,67 - 3,64 | l - ml |
| 24,5 - 24,7 | 3,63 - 3,60 | l - ml |
| 24,8 - 25,0 | 3,58 - 3,55 | l - ml |
| 25,0 - 25,2 | 3,55 - 3,53 | vl - l |
| 25,3 - 25,5 | 3,51 - 3,49 | vl - l |
| 25,6 - 25,8 | 3,47 - 3,45 | vl - l |
| 25,9 - 26,1 | 3,43 - 3,41 | l - ml |
| 26,4 - 26,6 | 3,37 - 3,34 | l - ml |
| 27,1 - 27,2 | 3,29 - 3,27 | l - ml |
| 27,6 - 27,8 | 3,22 - 3,20 | vl - l |

| | | |
|---|---|---|
| 27,9 - 28,10 | 3,19 - 3,17 | vl - 1 |
| 28,4 - 28,6 | 3,13 - 3,11 | 1 - ml |
| 28,7 - 28,9 | 3,10 - 3,08 | ml - mh |
| 29,2 - 29,4 | 3,05 - 3,03 | vl - 1 |
| 29,6 - 29,8 | 3,01 - 2,995 | vl - 1 |
| 30,2 - 30,4 | 2,956 - 2,937 | vl - 1 |
| 30,5 - 30,7 | 2,928 - 2,909 | vl - 1 |
| 31,0 - 31,2 | 2,882 - 2,864 | 1 - ml |
| 32,0 - 32,2 | 2,794 - 2,777 | vl - 1 |
| 32,7 - 32,9 | 2,736 - 2,720 | vl - 1 |
| 33,3 - 33,5 | 2,688 - 2,672 | vl - 1 |
| 34,7 - 34,9 | 2,582 - 2,568 | vl - 1 |
| 35,4 - 35,6 | 2,533 - 2,519 | vl - 1 |
| 38,3 - 38,5 | 2,348 - 2,336 | vl - 1 |
| 43,1 - 43,3 | 2,096 - 2,087 | vl - 1 |
| 44,9 - 45,1 | 2,017 - 2,008 | vl - 1 |
| 48,0 - 48,2 | 1,893 - 1,886 | vl - 1 |

vh : very high, h : high, mh : moderately high,
m : moderate, ml : moderately low, l : low, vl : very low

2. Microporous crystallised gallium phosphate and its substituted derivatives according to claim 1, for which the heteroatom X is silicon.

3. Microporous crystallised gallium phosphate and its substituted derivatives according to claim 1 or 2, for which R is quinuclidine.

4. A method of preparing microporous crystallised gallium phosphate and its substituted derivatives according to any of claims 1 to 3, characterised in that:
   a) a reaction mixture is formed containing at least the following compounds: water, at least one gallium source, at least one phosphorus source, at least one source of a heteroatom X selected from the group formed by the elements: Li, Be, Co, Mg, Mn, Zn, Al, B, Cr, Fe, Ge, Si, Ti, As and V, at least one source of at least one organic compound, at least one source of fluoride anions, the pH of the reaction medium being from 3 to 8 and the reaction mixture being of the following composition in terms of the molar ratio:

   $r'R : Ga_2O_3 : p'P_2O_5 : x'XO_2 : f'F : h'H_2O$

17

where r' is a number from 1 to 10,
where p' is a number from 0.3 to 1,
where x' is a number from 0 to 1.5,
where f' is a number from 0.1 to 4,
where h' is a number from 1 to 500,
where R is an organic compound selected from the group formed by cyclic amines,
where n is the degree of oxidation of the heteroatom X,
b) and the reaction mixture is kept at a heating temperature above 40°C until a crystalline compound is obtained.

5.  A method according to claim 4, wherein at stage a) the reaction mixture is of the following composition in terms of the molar ratio:

$$r'R:Ga_2O_3:p'P_2O_5:x'XO_2: f'F:h'H_2O$$

where r' is a number from 5 to 10,
where p' is a number from 0.5 to 1,
where x' is a number from 0 to 1,
where f' is a number from 0.3 to 2,
where h' is a number from 30 to 100,

6.  A method according to claim 4 or 5, wherein R is quinuclidine.

7.  A method according to any of claims 4 to 6, wherein X is silicon.

8.  A method according to any of clams 4 to 7, wherein, at stage b), the reaction mixture is kept at a heating temperature from 40-250°C until a crystalline compound is obtained.

9.  A method according to any of claims 4 to 7 wherein, at stage b), the reaction mixture is kept at a heating temperature from 60-220°C until a crystalline compound is obtained.

10. A method according to any of claims 4 to 9 wherein, after stage b), a calcining treatment of the solid is carried out at a temperature above 200°C.

**Patentansprüche**

1.  Mikroporöses kristallisiertes Galliumphosphat und seine substituierten Derivate, gekennzeichnet durch
    a) die folgende angenäherte allgemeine Formel:

$$R_rGa_gP_pX_xO_2F_f, hH_2O$$

wobei die Summe aus g, p und x gleich 1 ist, und wobei:
g eine Zahl einschließlich zwischen 0,3 und 0,5 ist,
p eine Zahl einschließlich zwischen 0,3 und 0,5 ist,
x eine Zahl einschließlich zwischen 0 und 0,4 ist,
r eine Zahl einschließlich zwischen 0,01 und 0,2 ist,
f eine Zahl einschließlich zwischen 0,01 und 0,2 ist,
h zwischen 0 und 0,5 entsprechend dem Hydratationsgrad des Feststoffs variiert,
R eine organische Verbindung ist, die aus der Gruppe ausgewählt ist, welche durch die cyclischen Amine gebildet ist,
X ein Heteroatom ist, das aus der Gruppe ausgewählt ist, welche durch die Elemente Li, Be, Co, Mg, Mn, Zn, Al, B, Cr, Fe, Ge, Si, Ti, As und V gebildet ist,

b) ein Röntgenbeugungsdiagramm, das in der folgenden Tabelle dargestellt ist:

Tabelle 1

| $2\Theta$ (°) | $d_{hld}$ (Å) | $I_{rel.}$ |
|---|---|---|
| 3,4 – 3,6 | 25,9 – 24,5 | ms bis m |
| 4,7 – 4,9 | 18,7 – 18,0 | s bis ms |
| 5,9 – 6,1 | 14,9 – 14,4 | ms bis m |
| 6,8 – 7,0 | 12,9 – 12,6 | s bis ms |
| 7,4 – 7,6 | 11,9 – 11,6 | ss bis s |
| 8,2 – 8,3 | 10,7 – 10,6 | ms bis m |
| 8,3 – 8,6 | 10,6 – 10,5 | ss bis s |
| 9,6 – 9,8 | 9,7 – 9,2 | SS |
| 10,1 – 10,3 | 8,75 – 8,58 | m bis S |
| 11,3 – 11,5 | 7,82 – 7,68 | ss bis s |
| 11,8 – 12 | 7,49 – 7,36 | ms bis mS |
| 12,3 – 12,5 | 7,18 – 7,07 | ss bis s |
| 12,8 – 13,0 | 6,91 – 6,80 | ss bis s |
| 13,6 – 13,8 | 6,50 – 6,41 | s bis ms |
| 14 – 14,2 | 6,32 – 6,23 | m bis mS |
| 14,4 – 14,6 | 6,14 – 6,06 | ss bis s |
| 15,2 – 15,4 | 5,82 – 5,74 | ss bis s |
| 15,6 – 15,8 | 5,67 – 5,60 | ss bis s |
| 16 – 16,2 | 5,53 – 5,46 | ss bis s |
| 16,7 – 16,9 | 5,30 – 5,24 | ss bis s |
| 17 – 17,2 | 5,21 – 5,15 | ss bis s |
| 17,4 – 17,6 | 5,09 – 5,03 | ss bis s |
| 17,7 – 17,9 | 5,00 – 4,95 | ss bis s |
| 18,4 – 18,6 | 4,81 – 4,76 | s bis ms |
| 18,7 – 18,9 | 4,74 – 4,69 | ss bis s |
| 19,4 – 19,6 | 4,57 – 4,52 | ss bis s |
| 19,6 – 19,8 | 4,52 – 4,48 | ss bis s |
| 20,5 – 20,7 | 4,32 – 4,28 | ms bis mS |
| 20,8 – 21,0 | 4,26 – 4,22 | ss bis s |
| 21,1 – 21,3 | 4,20 – 4,16 | s bis ms |

| | | |
|---|---|---|
| 21,4 - 21,6 | 4,14 - 4,11 | ss bis s |
| 21,7 - 21,9 | 4,09 - 4,05 | ss bis s |
| 22,0 - 22,2 | 4,03 - 4,00 | ss bis s |
| 22,3 - 22,4 | 3,98 - 3,95 | ss bis s |
| 22,4 - 22,6 | 3,95 - 3,93 | ss bis s |
| 22,7 - 22,9 | 3,91 - 3,88 | ss bis s |
| 23,0 - 23,2 | 3,86 - 3,83 | ss bis s |
| 23,3 - 23,5 | 3,81 - 3,78 | ss bis s |
| 23,9 - 24,1 | 3,71 - 3,68 | s bis ms |
| 24,2 - 24,4 | 3,67 - 3,64 | s bis ms |
| 24,5 - 24,7 | 3,63 - 3,60 | s bis ms |
| 24,8 - 25,0 | 3,58 - 3,55 | s bis ms |
| 25,0 - 25,2 | 3,55 - 3,53 | ss bis s |
| 25,3 - 25,5 | 3,51 - 3,49 | ss bis s |
| 25,6 - 25,8 | 3,47 - 3,45 | ss bis s |
| 25,9 - 26,1 | 3,43 - 3,41 | s bis ms |
| 26,4 - 26,6 | 3,37 - 3,34 | s bis ms |
| 27,1 - 27,2 | 3,29 - 3,27 | s bis ms |
| 27,6 - 27,8 | 3,22 - 3,20 | ss bis s |
| 27,9 - 28,10 | 3,19 - 3,17 | ss bis s |
| 28,4 - 28,6 | 3,13 - 3,11 | s bis ms |
| 28,7 - 28,9 | 3,10 - 3,08 | ms bis mS |
| 29,2 - 29,4 | 3,05 - 3,03 | ss bis s |
| 29,6 - 29,8 | 3,01 - 2,995 | ss bis s |
| 30,2 - 30,4 | 2,956 - 2,937 | ss bis s |
| 30,5 - 30,7 | 2,928 - 2,909 | ss bis s |
| 31,0 - 31,2 | 2,882 - 2,864 | s bis ms |
| 32,0 - 32,2 | 2,794 - 2,777 | ss bis s |
| 32,7 - 32,9 | 2,736 - 2,720 | ss bis s |
| 33,3 - 33,5 | 2,688 - 2,672 | ss bis s |
| 34,7 - 34,9 | 2,582 - 2,568 | ss bis s |
| 35,4 - 35,6 | 2,533 - 2,519 | ss bis s |
| 38,3 - 38,5 | 2,348 - 2,336 | ss bis s |
| 43,1 - 43,3 | 2,096 - 2,087 | ss bis s |
| 44,9 - 45,1 | 2,017 - 2,008 | ss bis s |
| 48,0 - 48,2 | 1,893 - 1,886 | ss bis s |

SS: sehr stark, S: stark, mS: mittelstark, m: mittel, ms: mittelschwach, s: schwach, ss: sehr schwach

2. Mikroporöses kristallisiertes Galliumphosphat und seine substituierten Derivate gemäß Anspruch 1, für welche das Heteroatom X Silicium ist.

3. Mikroporöses kristallisiertes Galliumphosphat und seine substituierten Derivate gemäß einem der Ansprüche 1 oder 2, für welche R Chinuclidin ist.

4. Verfahren zur Herstellung von mikroporösem kristallisiertem Galliumphosphat und von seinen substituierten Derivaten gemäß einem der Ansprüche 1 bis 3, dadurch gekennzeichnet, daß:

a) man ein Reaktionsgemisch bildet, das wenigstens die folgenden Verbindungen enthält: Wasser, wenigstens eine Galliumquelle, wenigstens eine Phosphorquelle, wenigstens eine Quelle eines Heteroatoms X, das aus der Gruppe ausgewählt ist, welche durch die Elemente Li, Be, Co, Mg, Mn, Zn, Al, B, Cr, Fe, Ge, Si, Ti, As und V gebildet ist, wenigstens eine Quelle von wenigstens einer organischen Verbindung, wenigstens eine Quelle von Fluoridanionen, wobei der pH-Wert der Reaktionsmilieu einschließlich zwischen 3 und 8 ist und das Reaktionsgemisch die folgende Zusammensetzung, im Molverhältnis ausgedrückt, aufweist:

$$r'R : Ga_2O_3 : p'P_2O_5 : x'XO_{n/2} : f'F : h'H_2O$$

wobei r' eine Zahl einschließlich zwischen 1 und 10 ist,
wobei p' eine Zahl einschließlich zwischen 0,3 und 1 ist,
wobei x' eine Zahl einschließlich zwischen 0 und 1,5 ist,
wobei f' eine Zahl einschließlich zwischen 0,1 und 4 ist,
wobei h' eine Zahl einschließlich zwischen 1 und 500 ist,
wobei R eine organische Verbindung ist, die aus der Gruppe ausgewählt ist, welche durch die cyclischen Amine gebildet ist,
wobei n der Oxidationsgrad des Heteroatoms X ist,
b) man das Reaktionsgemisch auf einer Heiztemperatur größer als 40°C hält, bis man eine kristalline Verbindung erhält.

5. Verfahren nach Anspruch 4, bei welchem das Reaktionsgemisch in dem Schritt a) die folgende Zusammensetzung, im Molverhältnis ausgedrückt, aufweist:

$$r'R : Ga_2O_3 : p'P_2O_5 : x'XO_{n/2} : f'F : h'H_2O$$

wobei r' eine Zahl einschließlich zwischen 5 und 10 ist,
wobei p' eine Zahl einschließlich zwischen 0,5 und 1 ist,
wobei x' eine Zahl einschließlich zwischen 0 und 1 ist,
wobei f' eine Zahl einschließlich zwischen 0,3 und 2 ist,
wobei h' eine Zahl einschließlich zwischen 30 und 100 ist.

6. Verfahren nach einem der Ansprüche 4 oder 5 bei welchem R Chinuclidin ist.

7. Verfahren nach einem der Ansprüche 4 bis 6, bei welchem X Silicium ist.

8. Verfahren nach einem der Ansprüche 4 bis 7, bei welchem man in dem Schritt b) das Reaktionsgemisch auf einer Heiztemperatur einschließlich zwischen 40 und 250°C hält, bis man eine kristalline Verbindung erhält.

9. Verfahren nach einem der Ansprüche 4 bis 7, bei welchem man das Reaktionsgemisch in dem Schritt b) auf einer Heiztemperatur einschließlich zwischen 60 und 220°C hält, bis man eine kristalline Verbindung erhält.

10. Verfahren nach einem der Ansprüche 4 bis 9, bei welchem man nach dem Schritt b) eine Kalzinierbehandlung des Feststoffes bei einer Temperatur größer als 200°C durchführt.